# EUROPEAN PATENT APPLICATION

(11) **EP 0 547 384 A1**
(43) Date of publication of application: **23.06.1993**
(21) Application number: 92119583.0
(22) Date of filing: 17.11.1992
(51) Int. Cl.: G01F 23/04

(54) **Dipstick for measuring oil level**

(30) Priority: 19.12.1991 IT TO910313 U
(71) Applicant: FIAT AUTO S.p.A., I-10135 Torino (IT)
(72) Inventor: Di Somma, Danilo, I-10023 Riva Presso Chieri (Torino) (IT); Ameglio, Enzo, I-10100 Torino (IT)
(74) Representative: Lotti, Giorgio

(57) **Abstract**

A dipstick for checking engine oil level, of the type consisting of a piano wire having a plug with a handgrip at one end and oil level indicating means in proximity to its opposite end. About the piano wire there is mounted a body forming an enlargement (22) in proximity to the indicating means (20), these consisting of a cylindrical body (25) mounted about that end of the dipstick distant from the plug, for oil level read-off.

## Description

This invention lies within the field of engine vehicle components, and relates specifically to a dipstick for checking the engine oil level.

Various types of dipstick are currently available, they comprising essentially:
- a thin usually metal rod some decimetres in length, partly immersed in the oil sump;
- an indicator portion situated in proximity to one end of the rod and with a cross-section which is flat compared with the rest of the rod; this part is normally immersed in the oil under static conditions, the oil level being read from it by extracting the rod from the engine;
- a sealing plug which under normal operating conditions closes the engine aperture through which the rod is inserted;
- a handgrip situated in proximity to the plug, by which the rod is extracted and re-inserted.

The dipsticks of known type are often of variously curved extension to follow the pattern of the channel into which they are inserted. As this channel is in direct communication with the oil sump, there is an apparent and easily noted drawback in that during the handling of the dipstick the indicating portion comes into contact with its oil-soiled walls, whether these are straight or curved, with the result that the user reads a level which is incorrect. For example the oil level may in reality be less than the minimum whereas during extraction or insertion (following the cleaning of the dipstick and hence before its immersion into the oil for reading purposes), the indicating portion could be soiled by it sliding against the channel walls, with the result that the user is deceived into reading an acceptable oil level.

An object of the invention is to provide a dipstick for checking engine oil level which obviates the aforesaid drawback, by always indicating the true oil level.

A further object of the present invention is to provide a dipstick having an indicating portion of a form such as to facilitate level reading.

These and further objects and advantages, which will be apparent hereinafter, are attained according to the invention by a dipstick for checking engine oil level, of the type consisting of a piano wire having a plug with a handgrip at one end and oil level indicating means in proximity to its opposite end, characterised in that about the piano wire there is mounted a body forming an enlargement in proximity to the indicating means, the indicating means also consisting of a body mounted about that end of the dipstick distant from the plug, said body comprising a portion of cylindrical shape for oil level read-off.

A preferred but non-limiting embodiment of the dipstick is described hereinafter with reference to the accompanying drawings, in which:
Figure 1 is an overall view of the dipstick according to the invention;
Figure 2 is an axial section to an enlarged scale through a detail of the dipstick of Figure 1;
Figure 3 is an axial section to an enlarged scale through a further detail of Figure 1; and
Figure 4 is an axial section through a further detail of Figure 1.

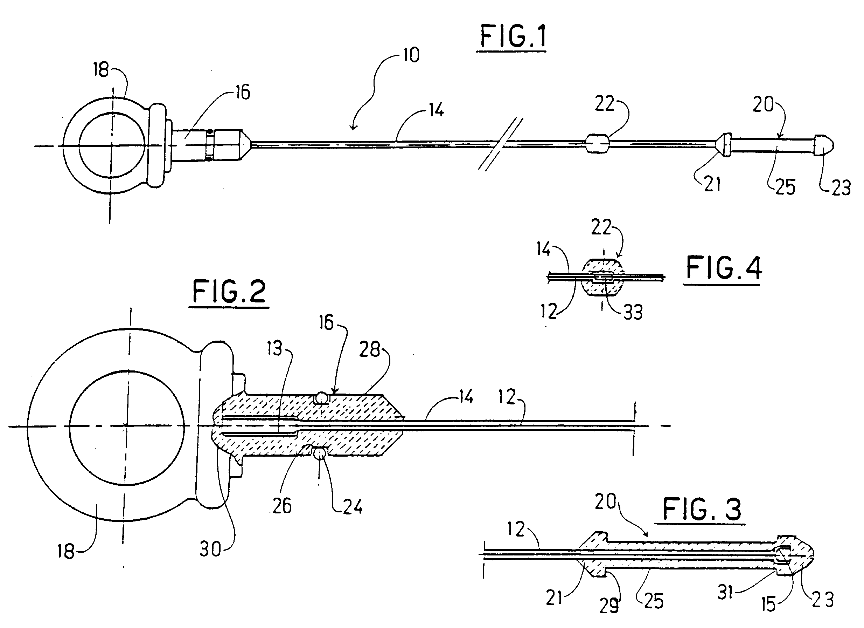

In Figure 1, a dipstick for checking oil level according to the invention is indicated overall by the reference numeral 10.

The dipstick 10 comprises a piano wire or metal core 12, which can be covered with a preferably plastics covering 14 coaxial to the wire 12; the covering can be moulded directly onto the wire 12, to provide a mono-dimensional structure of high flexibility.

The dipstick 10 also comprises an end plug 16 with an annular handgrip 18, at its opposite end there being provided a substantially cylindrical indicating portion 20. The dipstick 10 also comprises an enlargement 22 situated in proximity to the indicating portion 20.

With reference to Figure 2, the piano wire 12 comprises a socket 13 of elongate shape embedded in the plug 16, which also carries an annular gasket 24 housed in a circumferential groove 26 formed in the cylindrical surface 28 of the plug 16.

The handgrip 18 is moulded or bonded onto the heat, 30 of the plug 16.

With reference to Figure 3, the indicating portion 20 comprises a head 21 and a foot 23 connected together by a cylindrical portion 25 of diameter less than the diameter of the head 21 and foot 23.

The piano wire 12 extends along the longitudinal axis of the portion 20 to terminate with a socket 15 embedded within the foot 23.

The cylindrical portion 25 is joined to the head 21 and foot 23 in two respective connection zones 29 and 31, which correspond to the maximum and minimum engine oil levels respectively.

With reference to Figure 4, the enlargement 22, advantageously of plastics formation, is co-moulded onto the piano wire 12 at a thickness 33 thereof; the cross-section of this enlargement has an area approximately equal to that of the tube into which it is inserted and acts as a guide for the dipstick 10 within the tube.

In addition, the enlargement 22 ensures that during extraction and insertion of the dipstick 10 the inner walls of the tube will be spaced from the indicating portion, so preventing contact between these parts and hence avoiding soiling of the indicating portion by sliding contact.

Compared with traditional dipsticks, in which the oil level read-off portion is representeded by a flat face situated in proximity to the end of the dipstick, the present invention provides a dipstick from which the oil level can be read more readily, in that it can be read from the entire circumference, without the need to rotate the dipstick in order to find the flat face.

A further advantage of the dipstick according to the invention is that the core 12 together with the enlargement 22 and cylindrical end 20 form an extremely flexible unit; the dipstick 10 can therefore be easily inserted into tubes of non-rectilinear extension, it therefore being of universal type, enabling it to be used on different types of engine.

## Claims

1. A dipstick for checking engine oil level, of the type consisting of a piano wire having a plug with a handgrip at one end and oil level indicating means in proximity to its opposite end, characterised in that about the piano wire there is mounted a body forming an enlargement (22) in proximity to the indicating means (20), the indicating means (20) also consisting of a body mounted about that end of the dipstick distant from the plug, said body comprising a portion (25) of cylindrical shape for oil level read-off.

2. A dipstick as claimed in claim 1, characterised in that the enlargement (22) is of plastics material moulded onto said piano wire (12) about a thickness (33) of said wire (12).

3. A dipstick as claimed in claim 1, characterised in that the cylindrical portion (25) of the indicating means (20) is joined at its ends to a head (21) and to a foot (23) respectively, these being of different cross-section than the cylindrical portion (25).

4. A dipstick is claimed in claim 3, characterised in that the cross-section of the cylindrical portion (25) is less than that of the head (21) and foot (23).

5. A dipstick as claimed in claim 2, characterised in that the enlargement (22) has a cross-section substantially corresponding to that of the channel into which the dipstick is inserted.
